# NEW EUROPEAN PATENT SPECIFICATION

(11) **EP 2 617 995 B2**
(45) Date of publication and mention of the opposition decision: **07.02.2018**
(45) Mention of the grant of the patent: 18.06.2014
(21) Application number: 12151904.5
(22) Date of filing: 20.01.2012
(51) Int. Cl.: F03D 11/00

(54) **Wind turbine**
Windturbine
Éolienne

(43) Date of publication of application: 24.07.2013
(73) Proprietor: Siemens Aktiengesellschaft, 80333 München (DE)
(72) Inventor: Hohle, Andreas Christian, 52477 Alsdorf (DE); Schneider, Peter, 52379 Langerwehe (DE); Tchemtchoua, Brice, 4850 Montzen (BE)

(56) References cited:
- EP-A1- 2 385 247
- EP-A1- 2 385 247
- WO-A1-01/21956
- DE-A1- 10 119 625
- DE-A1- 19 528 862
- DE-A1-102009 016 642
- US-A1- 2009 216 464
- US-B1- 6 298 948
- US-B1- 6 298 948

## Description

The invention relates to a wind turbine, comprising a number of bearing components and/or components of the drive train of the wind turbine, with at least one humidity determining means adapted to generate at least one component-specific hubmidity information indicating a degree of humidity of at least one bearing component and/or at least one component of the drive train.

Wind turbines may be exposed to extreme weather conditions during storage, transportation, and operation. Thereby, humidity may enter the inside of the wind turbine and its components. Though a certain content of water may be tolerated, the danger of corrosion of respective components of the wind turbine is given. Particularly, bearing components and/or components of the drive train such as gear boxes, shafts, etc. are sensitive against humidity.

Nowadays, approaches have been made to actively reduce the humidity content of respective bearing components and/or cormponents of the drive train by using humidity filters and/or dehumidifiers. Yet, obtaining information concerning humidity content of the respective bearing components and/or components of the drive train is not possible.

A wind turbine as described above comprising a number of bearing components and a humidity determining means in form of a sensor element being responsive to the water content of the lubricant oil is described EP 2 385 247 A1.

Hence, it is an object of the invention to provide an improved wind turbine allowing determining the humidity of at least respective bearing components and/or components of the drive train.

This is inventively achieved by a wind turbine as initially described, wherein a wind turbine control unit is provided, whereby the wind turbine control unit is adapted to control at least one operational parameter of the wind turbine under consideration of the at least one humidity information.

The inventive wind turbine is provided with at least one humidity determining means. The humidity determining means is adapted to generate at least one component-specific humidity information. The humidity information indicates a degree of humidity of at least one bearing component and/or at least one component of the drive train. The humidity information may be understood as an information qualitatively or quantitatively indicating the humidity of at least one specific component, at least one specific group of components, or all respective components of the wind turbine. I. e., the humidity information may separately or collectively indicate hubmidity relevant information of the respective components of the wind turbine.

Generally, the humidity relevant information may concern all kinds of parameters or quantities allowing a direct or indirect determination of the humidity of at least one respective component. In such a manner, the humidity information may refer to parameters or quantities like humidity or water content, surface humidity, ambient humidity in the immediate region of the respective component, etc. The humidity information may also include information concerning temperature of a respective component, ambient temperature, ambient pressure, air density, composition of air, etc.

Hence, the inventive principle allows a qualitative or quantitative determination of all humidity relevant parameters of the bearing components and/or components of the drive train. Humidity is not necessarily restricted to water humidity, but may also refer to other fluids.

Thereby, bearing components includes all kinds of bearing components of the wind turbine such as main bearings, generator bearings, etc. Yet, the humidity information also refers to the humidity content of lubricating means such as grease or oil of the bearing components. Components of the drive train are all kinds of components which are directly or indirectly linked to the drive train of the wind turbine, i.e. the mechanical connection between the rotor hub holding the rotor blades and the generator as the power generating unit of the wind turbine. Typical examples of respective components of the drive train of the wind turbine are the main shaft, gear boxes, etc.

Generally, the humidity information may also indicate a degree of humidity of other components of the wind turbine as well.

As mentioned above, it is possible that each bearing component and/or component of the drive train is provided with a respective humidity determining means, whereby each respective humidity determining means is adapted to generate at least one component-specific humidity information. Of course, a respective humidity determining means may also generate respective humidity information for a number of different bearing components and/or components of the drive train.

Preferably, the humidity determining means comprises at least one humidity sensor element adapted to determine the surface humidity and/or humidity content of the respective component. A respective sensor element may comprise a number of sensors distributed within or along the outer circumference of a respective component.

According to the invention, a wind turbine control unit is provided, whereby the wind turbine control unit is adapted to control at least one operational parameter of the wind turbine under consideration of the at least one humidity information. The wind turbine control unit or central wind turbine controller communicates with the respective humidity determining means in order to obtain the humidity information. If a respective humidity information indicates a humidity content of a respective component above a certain predetermined humidity threshold value, operation of the respective component and possibly the entire wind turbrine may be limited or even stopped in order to avoid the danger of damage of the respective component or further components. Likewise, operation of the respective component and possibly the entire wind turbine are usually not to be limited or stopped when a respective humidity information indicates a humidity content of the respective component below a respective predetermined threshold value. Respective operational parameters of the wind turbine may be power output, rotational speed of the main shaft or the rotor hub for instance.

The humidity threshold value may vary or be varied for different components of the wind turbine and/or other parameters such as the climatic conditions, seasons, etc.

It is also possible that a bearing lubricating means adapted to inject a certain amount of lubricant into bearing components of the wind turbine, whereby the bearing lubricating means is adapted to be controlled by a control unit under consideration of the at least one humidity information. In this case, the control unit of the bearing lubricating means may perform lubrication or additional lubrication of a respective bearing component when the humidity information indicates that humidity of the respective bearing component, i. e. surface humidity of the components of the bearing component and particularly humidity content of a lubricating means, exceeds a certain humidity threshold value. Lubrication may be performed by injecting a certain amount of lubricant and/or performing a concerted rotation of the components of the bearing component relative to each other for instance.

Further, it is possible that at least one respective component is provided with a drying means, particularly comprising at least one fan and/or at least one heater, whereby the drying means is adapted to be operated by a control unit under consideration of the at least one humidity information. The drying means may be actuated when the humidity of a respective component exceeds a certain humidity threshold value. Operation of the drying means may be stopped or decreased, when the humidity information indicates that the humidity of the respective component has decreased below the humidity threshold value.

According to a further embodiment of the invention, a storage medium is provided, with the storage medium being adapted to store determined respective humidity information. The storage medium may also store respective, particularly component-specific, humidity threshold values. Thus, historic humidity information is available and may be used for comparison with current humidity information such as particularly for evaluation purposes.

Aside, the invention relates to a method for determining the humidity of at least one bearing component and/or at least one component of the drive train component of a wind turbine, whereby at least one humidity determining means generates at least one humidity information indicating a degree of humidity, particularly a degree of the surface humidity and/or the humidity content, of at least one bearing component and/or at least one component of the drive train of the wind turbine, whereby at least one operational parameter of the wind turbine is controlled under consideration of the at least one humidity information.

Thereby, the humidity information may be generated in continuous or discontinuous manner. Hence, a respective humidity information may be generated permanently or at given time intervals such as every 10 seconds, 10 minutes, for instance. The time intervals may be individually defined by a user.

The humidity information may be stored in a storage medium. Thus, historic humidity information is available and may be used for comparison with current humidity information such as particularly for evaluation purposes.

At least one respective component may be provided with a drying means, particularly comprising at least one fan and/or at least one heater, whereby operation of the drying means is controlled by a control unit under consideration of the at least one humidity information. In such a manner, drying of a respective component may be performed, when the component-specific humidity information has exceeded a respective component-specific humidity threshold value.

Further, at least one bearing lubricating means adapted to inject a certain amount of lubricant into bearing components of the wind turbine may be provided, whereby the bearing lubricating means is controlled by a control unit under consideration of the at least one humidity information. Hence, proper lubrication of respective bearing components may be assured. Particularly, undesired cases of contaminated lubricants with comparatively high humidity content may be replaced by lubricant of no or admissible humidity content. Generally, lubrication may be performed by injecting a certain amount of lubricant and/or performing a concerted rotation of the components of the bearing component relative to each other for instance.

In the following, the invention is described in detail, whereby reference is made to the principle drawing, whereby the figure shows a principle drawing of a wind turbine according to an exemplary embodiment of the invention.

The figure shows a principle drawing of a wind turbine 1 according to an exemplary embodiment of the invention. Essential components of the wind turbine 1 are a tower construction 2 holding a nacelle 3, a rotor hub 4 having a number of rotor blades 5 attached, thereto, a gear box 6 being mechanically connected to the rotor hub 4 by means of a main shaft 7, and a generator 8 being mechanically connected to the gear box 6 by means of a second shaft 9. In other embodiments of the wind turbine 1 the rotor hub 4 may be directly mechanically connected to the gear box 6 without the need of a respective main shaft 7.

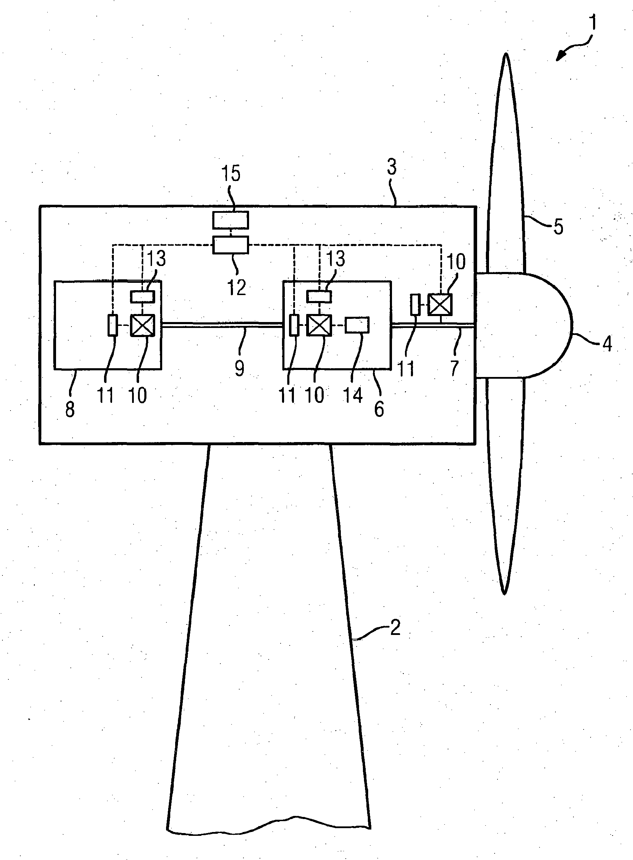

According to the embodiment of fig. 1, the rotor hub 4, the main shaft 7, the gear box 6, the second shaft 9 and the generator 8 represent essential components of the drive train of the wind turbine 1. Further, bearing components 10 such as roller bearings or plain bearings are provided with diverse components of the wind turbine 1 such as the gear box 6 and the generator 8, for instance.

Further, a number of humidity determining means 11 adapted to generate at least one component-specific humidity information indicating a degree of humidity of at least one bearing component and/or at least one component of the drive train are provided. Thereby, the humidity information may particularly indicate the surface humidity of a respective component of the wind turbine 1 and/or the humidity content of a respective component of the wind turbine 1 and/or the ambient humidity in the region surrounding a respective component of the wind turbine 1.

Respective humidity determining means 11 comprise at least one humidity sensor element, which is particularly adapted to determine the surface humidity of a respective component of the wind turbine 1 and/or the humidity content of a respective component of the wind turbine 1 and/or the ambient humidity in the region surrounding a respective component of the wind turbine 1.

Respective humidity determining means are particularly provided with rotatable or rotating components of the wind turbine 1, i.e. the main shaft 7, the gear box 6 as well as the bearing component 10 associated with the gear box 6, and the generator 8 as well as the bearing component 10 associated with the generator 8. Hence, all humidity relevant parameters may be individually monitored for the respective components. Particularly, the humidity or water content of respective bearing lubricants such as oil, grease or the like may be determined by a respective humidity determining means 11.

Further, a wind turbine control unit 12 is provided. The wind turbine control unit 12 is adapted to control at least one operational parameter of the wind turbine 1 under consideration of the at least one humidity information. A respective operational parameter of the wind turbine 1 may be power output of the generator and/or rotational speed of the rotor hub 4, the main shaft 7, respective components of the gear box 6, or the second shaft 9, for instance. Hence, if at least one humidity information indicates that the humidity, i.e. particularly the surface humidity and/or the humidity content of respective component of the wind turbine 1 such as particularly the gear box 6 or respective sub components of the gear box 6 or respective bearing devices 10 exceed a given or adjustable component-specific threshold value, power output and/or rotational speed may be appropriately reduced so as to reduce the danger of damage of respective components or the wind turbine 1 as a whole.

In the same manner, respective bearing lubricating means 13 adapted to inject a certain amount of lubricant into bearing components 10 of the wind turbine 1. The bearing lubricating 13 means are controlled by the control unit 12 under consideration of respective humidity information, i. e. the bearing lubrication means 13 are particularly actuated when the humidity of a respective component exceeds a certain component-specific humidity threshold value.

Additionally, some components such as the gear box 6 for instance are provided with drying means 14, particularly comprising at least one fan and/or at least one heater. The drying means 14 is operated by the control unit 12 under consideration of respective humidity information, i. e. the drying means 14 are particularly actuated when the humidity of a respective component exceeds a certain component-specific humidity threshold value.

The control unit 12 further communicates with or comprises a storage medium 15 so that historic humidity information may be stored and used for evaluation purposes, for instance.

The inventive wind turbine 1 is adapted to perform the inventive method. The inventive method allows determining the humidity of at least one bearing component 10 and/or at least one component of the drive train of a wind turbine 1. Thereby, respective humidity determining means 11, preferably continuously, generate respective humidity information indicating a degree of humidity of at least one bearing component 10 and/or at least one component of the drive train of the wind turbine 1, whereby at least one operational parameter of the wind turbine 1 is controlled under consideration of the at least one humidity information.

Although the present invention has been described in detail with reference to the preferred embodiment, the present invention is not limited by the disclosed examples from which the skilled person is able to derive other variations without departing from the scope of the invention.

## Claims

1. Wind turbine (1), comprising a number of bearing components (10) and/or components of the drive train of the wind turbine (1), with at least one humidity determining means (11) adapted to generate at least one component-specific humidity information indicating a degree of humidity of at least one bearing component (10) and/or at least one component of the drive train, namely a rotor hub (4) and/or a main shaft (7) and/or a gear box (6) and/or a shaft (9) connecting a generator (8) mechanically to the or a gear box (6), wherein a wind turbine control unit (12) is provided, whereby the wind turbine control unit (12) is adapted to control at least one operational parameter of the wind turbine (1) under consideration of the at least one humidity information.

2. Wind turbine according to claim 1, wherein the humidity information indicates the surface humidity and/or the humidity content of a respective bearing component (10) and/or component of the drive train.

3. Wind turbine according to claim 1 or 2, wherein each bearing component (10) and/or component of the drive train is provided with a respective humidity determining means (11), whereby each respective humidity determining means (11) is adapted to generate at least one component-specific humidity information.

4. Wind turbine according to claim 3, wherein the component of the drive train is a rotatable or rotating component of the or a gear box (6) and/or the or a drive shaft (7, 9).

5. Wind turbine according to one of the preceding claims, wherein the humidity determining means (11) comprises at least one humidity sensor element adapted to determine the surface humidity and/or humidity content of the respective component.

6. Wind turbine according to one of the preceding claims, wherein a bearing lubricating means (13) adapted to inject a certain amount of lubricant into bearing components of the wind turbine (1), whereby the bearing lubricating means (13) is adapted to be controlled by a control unit (12) under consideration of the at least one humidity information.

7. Wind turbine according to one of the preceding claims, wherein at least one respective component is provided with a drying means (14), particularly comprising at least one fan and/or at least one heater, whereby the drying means (14) is adapted to be operated by a control unit (12) under consideration of the at least one humidity information.

8. Wind turbine according to one of the preceding claims, wherein a storage medium (15) is provided, with the storage medium (15) being adapted to store determined respective humidity information.

9. Method for determining the humidity of at least one bearing component (10) and/or at least one component of the drive train of a wind turbine (1), particularly the wind turbine (1) according to one of the preceding claims, whereby at least one humidity determining means (11) generates at least one humidity information indicating a degree of humidity of at least one bearing component (10) and/or at least one component of the drive train of the wind turbine (1), namely a rotor hub (4) and/or a main shaft (7) and/or a gear box (6) and/or a shaft (9) connecting a generator (8) mechanically to the or a gear box (6), whereby at least one operational parameter of the wind turbine (1) is controlled under consideration of the at least one humidity information.

10. Method according to claim 9, wherein the humidity information is generated in continuous or discontinuous manner.

11. Method according to claim 9 or 10, wherein the humidity information is stored in a storage medium (15).

12. Method according to one of the claims 9 - 11, wherein at least one respective component is provided with a drying means (14), particularly comprising at least one fan and/or at least one heater, whereby operation of the drying means (14) is controlled by a control unit (12) under consideration of the at least one humidity information.

13. Method according to one of the claims 9 - 12, wherein at least one a bearing lubricating means (13) adapted to inject a certain amount of lubricant into bearing components (10) of the wind turbine (1) is provided, whereby the bearing lubricating means (13) is controlled by a control unit (12) under consideration of the at least one humidity information.

## Patentansprüche

1. Windturbine (1), welche eine Anzahl von Lagerkomponenten (10) und/oder Komponenten des Antriebsstrangs der Windturbine (1) umfasst, mit mindestens einem Feuchtigkeitsbestimmungsmittel (11), das dazu eingerichtet ist, mindestens eine komponentenspezifische Feuchtigkeitsinformation zu erzeugen, die einen Feuchtigkeitsgrad mindestens einer Lagerkomponente (10) und/oder mindestens einer Komponente des Antriebsstrangs angibt, nämlich einer Rotornabe (4) und/oder einer Hauptwelle (7) und/oder eines Getriebes (6) und/oder einer Welle (9), die einen Generator (8) mechanisch mit dem oder einem Getriebe (6) verbindet, wobei eine Windturbinen-Steuereinheit (12) vorgesehen ist, wobei die Windturbinen-Steuereinheit (12) dazu eingerichtet ist, mindestens einen Betriebsparameter der Windturbine (1) unter Berücksichtigung der mindestens einen Feuchtigkeitsinformation zu steuern.

2. Windturbine nach Anspruch 1, wobei die Feuchtigkeitsinformation die Oberflächenfeuchtigkeit und/oder den Feuchtigkeitsgehalt einer jeweiligen Lagerkomponente (10) und/oder Komponente des Antriebsstrangs angibt.

3. Windturbine nach Anspruch 1 oder 2, wobei jede Lagerkomponente (10) und/oder Komponente des Antriebsstrangs mit einem jeweiligen Feuchtigkeitsbestimmungsmittel (11) versehen ist, wobei jedes jeweilige Feuchtigkeitsbestimmungsmittel (11) dazu eingerichtet ist, mindestens eine komponentenspezifische Feuchtigkeitsinformation zu erzeugen.

4. Windturbine nach Anspruch 3, wobei die Komponente des Antriebsstrangs eine drehbare oder sich drehende Komponente des oder eines Getriebes (6) und/oder der oder einer Antriebswelle (7, 9) ist.

5. Windturbine nach einem der vorhergehenden Ansprüche, wobei das Feuchtigkeitsbestimmungsmittel (11) mindestens ein Feuchtigkeitssensorelement umfasst, das dazu eingerichtet ist, die Oberflächenfeuchtigkeit und/oder den Feuchtigkeitsgehalt der jeweiligen Komponente zu bestimmen.

6. Windturbine nach einem der vorhergehenden Ansprüche, wobei ein Lagerschmiermittel (13) dazu eingerichtet ist, eine bestimmte Menge Schmierstoff in Lagerkomponenten der Windturbine (1) einzuspritzen, wobei das Lagerschmiermittel (13) dazu eingerichtet ist, von einer Steuereinheit (12) unter Berücksichtigung der mindestens einen Feuchtigkeitsinformation gesteuert zu werden.

7. Windturbine nach einem der vorhergehenden Ansprüche, wobei mindestens eine jeweilige Komponente mit einem Trocknungsmittel (14) versehen ist, das insbesondere mindestens einen Lüfter und/oder mindestens ein Heizgerät umfasst, wobei das Trocknungsmittel (14) dazu eingerichtet ist, von einer Steuereinheit (12) unter Berücksichtigung der mindestens einen Feuchtigkeitsinformation betrieben zu werden.

8. Windturbine nach einem der vorhergehenden Ansprüche, wobei ein Speichermedium (15) vorgesehen ist, wobei das Speichermedium (15) dazu eingerichtet ist, bestimmte jeweilige Feuchtigkeitsinformationen zu speichern.

9. Verfahren zur Bestimmung der Feuchtigkeit mindestens einer Lagerkomponente (10) und/oder mindestens einer Komponente des Antriebsstrangs einer Windturbine (1), insbesondere der Windturbine (1) nach einem der vorhergehenden Ansprüche, wobei mindestens ein Feuchtigkeitsbestimmungsmittel (11) mindestens eine Feuchtigkeitsinformation erzeugt, die einen Feuchtigkeitsgrad mindestens einer Lagerkomponente (10) und/oder mindestens einer Komponente des Antriebsstrangs der Windturbine (1) angibt, nämlich einer Rotornabe (4) und/oder einer Hauptwelle (7) und/oder eines Getriebes (6) und/oder einer Welle (9), die einen Generator (8) mechanisch mit dem oder einem Getriebe (6) verbindet, wobei mindestens ein Betriebsparameter der Windturbine (1) unter Berücksichtigung der mindestens einen Feuchtigkeitsinformation gesteuert wird.

10. Verfahren nach Anspruch 9, wobei die Feuchtigkeitsinformation auf kontinuierliche oder diskontinuierliche Weise erzeugt wird.

11. Verfahren nach Anspruch 9 oder 10, wobei die Feuchtigkeitsinformation in einem Speichermedium (15) gespeichert wird.

12. Verfahren nach einem der Ansprüche 9 bis 11, wobei mindestens eine jeweilige Komponente mit einem Trocknungsmittel (14) versehen ist, das insbesondere mindestens einen Lüfter und/oder mindestens ein Heizgerät umfasst, wobei der Betrieb des Trocknungsmittels (14) von einer Steuereinheit (12) unter Berücksichtigung der mindestens einen Feuchtigkeitsinformation gesteuert wird.

13. Verfahren nach einem der Ansprüche 9 bis 12, wobei mindestens ein Lagerschmiermittel (13) vorgesehen ist, das dazu eingerichtet ist, eine bestimmte Menge Schmierstoff in Lagerkomponenten (10) der Windturbine (1) einzuspritzen, wobei das Lagerschmiermittel (13) von einer Steuereinheit (12) unter Berücksichtigung der mindestens einen Feuchtigkeitsinformation gesteuert wird.

## Revendications

1. Eolienne (1), comprenant plusieurs composants à palier (10) et/ou composants de la transmission de l'éolienne (1), avec au moins un moyen de détermination de l'humidité (11) adapté pour générer au moins une information d'humidité spécifique au composant indiquant un degré d'humidité d'au moins un composant à palier (10) et/ou d'au moins un composant de la transmission, à savoir un moyeu de rotor (4) et/ou un arbre principal (7) et/ou une boîte à engrenages (6) et/ou un arbre (9) raccordant un générateur (8) mécaniquement à la ou à une boîte à engrenages (6), dans laquelle une unité de commande d'éolienne (12) est prévue, moyennant quoi l'unité de commande d'éolienne (12) est adaptée pour commander au moins un paramètre de fonctionnement de l'éolienne (1) en prenant en considération ladite au moins une information d'humidité.

2. Eolienne selon la revendication 1, dans laquelle l'information d'humidité indique l'humidité en surface et/ou la teneur en humidité d'un composant à palier (10) respectif et/ou d'un composant respectif de la transmission.

3. Eolienne selon la revendication 1 ou 2, dans laquelle chaque composant à palier (10) et/ou composant de la transmission est doté d'un moyen de détermination de l'humidité respective (11), moyennant quoi chaque moyen de détermination de l'humidité respective (11) est adapté pour générer au moins une information d'humidité spécifique au composant.

4. Eolienne selon la revendication 3, dans laquelle le composant de la transmission est un composant rotatif ou tournant de la ou d'une boîte à engrenages (6) et/ou d'un ou de l'arbre de transmission (7, 9).

5. Eolienne selon l'une des revendications précédentes, dans laquelle le moyen de détermination de l'humidité (11) comprend au moins un élément de détection de l'humidité adapté pour déterminer l'humidité en surface et/ou la teneur en humidité du composant respectif.

6. Eolienne selon l'une des revendications précédentes, dans laquelle un moyen de lubrification de paliers (13) adapté pour injecter une certaine quantité de lubrifiant dans les composants à palier de l'éolienne (1), moyennant quoi le moyen de lubrification de paliers (13) est adapté pour être commandé par une unité de commande (12) en prenant en considération l'au moins une information d'humidité.

7. Eolienne selon l'une des revendications précédentes, dans laquelle au moins un composant respectif est doté d'un moyen de séchage (14), comprenant en particulier au moins un ventilateur et/ou au moins un dispositif chauffant, moyennant quoi le moyen de séchage (14) est adapté pour être actionné par une unité de commande (12) en prenant en considération l'au moins une information d'humidité.

8. Eolienne selon l'une des revendications précédentes, dans laquelle un support de stockage (15) est prévu, le support de stockage (15) étant adapté pour stocker des informations d'humidité respective déterminées.

9. Procédé de détermination de l'humidité d'au moins un composant à palier (10) et/ou d'au moins un composant de la transmission d'une éolienne (1), en particulier l'éolienne (1) selon l'une des revendications précédentes, moyennant quoi au moins un moyen de détermination de l'humidité (11) génère au moins une information d'humidité indiquant un degré d'humidité d'au moins un composant à palier (10) et/ou d'au moins un composant de la transmission de l'éolienne (1), à savoir un moyeu de rotor (4) et/ou un arbre principal (7) et/ou une boîte à engrenages (6) et/ou un arbre (9) raccordant un générateur (8) mécaniquement à la ou à une boîte à engrenages (6), moyennant quoi au moins un paramètre de fonctionnement de l'éolienne (1) est commandé en prenant en considération l'au moins une information d'humidité.

10. Procédé selon la revendication 9, dans lequel l'information d'humidité est générée de manière continue ou discontinue.

11. Procédé selon la revendication 9 ou 10, dans lequel l'information d'humidité est stockée dans un support de stockage (15).

12. Procédé selon l'une des revendications 9-11, dans lequel au moins un composant respectif est doté d'un moyen de séchage (14), comprenant en particulier au moins un ventilateur et/ou au moins un dispositif chauffant, moyennant quoi le fonctionnement du moyen de séchage (14) est commandé par une unité de commande (12) en prenant en considération l'au moins une information d'humidité.

13. Procédé selon l'une des revendications 9-12, dans lequel au moins un moyen de lubrification de paliers (13) adapté pour injecter une certaine quantité de lubrifiant dans des composants à palier (10) de l'éolienne (1) est prévu, moyennant quoi le moyen de lubrification de paliers (13) est commandé par une unité de commande (12) en prenant en considération l'au moins une information d'humidité.
